# EUROPEAN PATENT APPLICATION

(11) **EP 1 833 198 A1**
(43) Date of publication of application: **12.09.2007**
(21) Application number: 05822297.7
(22) Date of filing: 26.12.2005
(51) Int. Cl.: H04L 12/28, H04L 12/24

(54) **A METHOD, A APPARATUS AND A NETWORK THEREOF FOR ENSURING THE SERVICE QOS OF BROADBAND ACCESS**

(30) Priority: 30.12.2004 CN 200410103539
(71) Applicant: Huawei Technologies Co., Ltd., Longgang District, Shenzhen Guangdong 518129 (CN)
(72) Inventor: WANG, Zhanfeng, Huawei Administration Building, Shenzhen, Guangdong 518129 (CN); CHENG, Rong, Huawei Administration Building, Shenzhen, Guangdong 518129 (CN); CHEN, Wumao, Huawei Administration Building, Shenzhen, Guangdong 518129 (CN)
(74) Representative: Körber, Martin Hans
(86) International application number: PCT/CN2005/002311
(87) International publication number: WO 2006/069527

(57) **Abstract**

An embodiment of the present invention provides a method for guaranteeing QoS of services in a broadband access network includes: establishing a plurality of logical channels between a plurality of subscriber access devices and a Broadband Access Server (BAS) respectively, allocating bandwidth resources for each of the plurality of logical channels; determining whether to allow a real-time service to access the broadband access network according to bandwidth resources occupation information of the plurality of logical channels; releasing bandwidth resources occupied by the real-time service after the real-time service is completed. Embodiments of the present invention provides a broadband access network and device for guaranteeing QoS of services as well.

## Description

### Field of the Technology

The present invention relates to the field of network communication, and more particularly, to a broadband access network and method for guaranteeing QoS of services.

### Background of the Invention

Along with rapid developments of the Voice over Packet (VoP) technology, digital TV technology and digital broadcast technology, each kind of service is allowed to share an unified packet bearer network, especially to share an access network. At present, the broadband network constructed based on the IP technology has some advantages such as low cost and rich bandwidth. Therefore, the broadband network provides a huge space of imagination for the development of application services.

At the same time, new services can be introduced to the network smoothly through open interfaces, because the gradual improvement of the architecture of a Next Generation Network (NGN) provides an integrated platform for the application services. Such architecture makes it easy to addressnew services, and reduce CAPital EXpenditure (CAPEX). Moreover, if a unified broadband access network is used to support multiple types of services, the total cost of the network can be reduced and the the operator's competitiveness can be enhanced.

However, in the broadband access network, real-time services such as voice, visible communication, video have different QoS requirements from the traditional data services, like Email, File Transfer Protocol (FTP) and so on. In other words, such real-time services as voice, visible communication, video, etc. require higher QoS guarantees, which requires the broadband access network to detect the type of service, and provide a corresponding QoS guarantee.

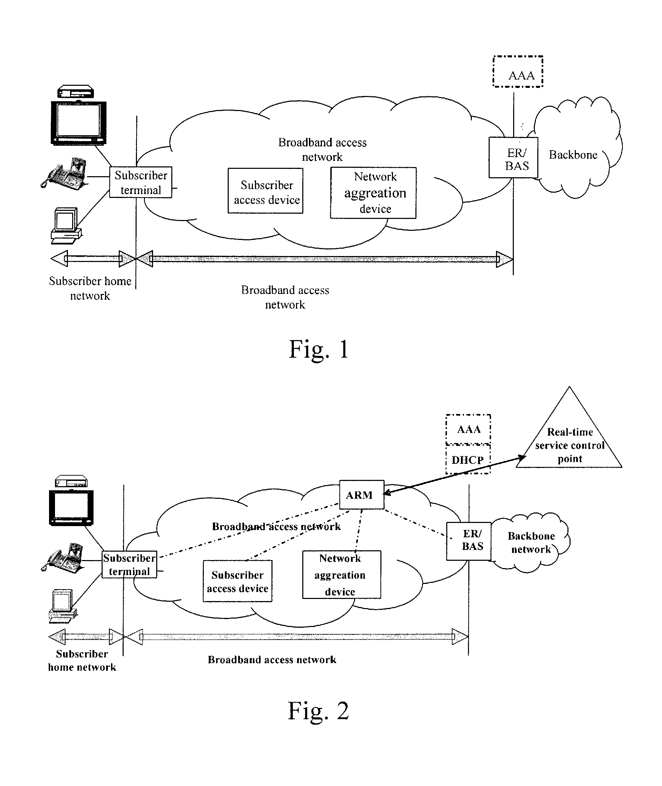

A conventional broadband access network system is shown in Fig. 1, which includes a subscriber access device, a network aggregation device, a Broadband Access Server (BAS) and an Authentication, Authorization and Accounting (AAA) server. The subscriber access device may be a Digital Subscriber Line Access Multiplexer (DSLAM) or a Local Area Network Switch (LAN SW). The network aggregation device may be an Asynchronous Transfer Mode (ATM) Switch or an Ethernet Switch. The subscriber access device provides subscriber line multiplexing function. The network aggregation device connects the subscriber access device to the BAS. The BAS is the aggregation point for the subscriber traffic, and cooperates with the AAA server to implement AAA functions for subscribers.

While operators deploy current broadband access network, they mainly focus on data service such as Internet access, and pay little attention to those services which require QoS guaranteed. To minmize the cost of the network, the network should cover subscribers as much as it could. Therefore, a multi-layer aggregation network with high bandwidth concentration ratio is established by Best-effort devices which could not differentiate services.

Inevitably, congestion will occur on multiple nodes, because the bandwidth concentration ratio is relatively high. The QoS of real-time services can not be guaranteed when the congestion happens, because the access device can not differentiate services and guarante QoS for different services. For the operators, it is impossible to charge the subscribers enough service fees, because they can not guarantee the QoS.

### Summary of the Invention

Embodiments of the present invention provide a broadband access network, device and method for guaranteeing QoS of services, so as to guarantee QoS of real-time services in the broadband access network, and utilize the bandwidth resources in the network reasonably.

An embodiment of the present invention provides a method for guaranteeing QoS of services in a broadband access network, includes: establishing a plurality of logical channels between a plurality of subscriber access devices and a Broadband Access Server (BAS) respectively, allocating bandwidth resources for each of the plurality of logical channels; determining whether to allow a real-time service to access the broadband access network according to bandwidth resources occupation information of the plurality of logical channels; and releasing bandwidth resources occupied by the real-time service after the real-time service is completed.

At least one logical channel is established between each of the plurality of subscriber access devices and the BAS.

The plurality of logical channels are Virtual Paths (VPs), Virtual Local Area Network (VLAN) channels, or Label Switch Paths (LSPs).

The method further includes storing information of each of the plurality of logical channels and bandwidth resources information correspongding to each of the plurality of logical channels.

The method further includes setting or modifying the bandwidth resources information corresponding to each of the plurality of logical channels locally or through remote login.

Determining whether remaining bandwidth resource of a logical channel of the plurality of logical channels satisfies the bandwidth resources requirements of the real-time service, allowing the real-time service to access the broadband access network if the remaining bandwidth resource of the logical channel of the plurality of logical channels satisfies the bandwidth resources requirements of the real-time service; otherwise, rejecting the accessing of the real-time service.

The method further includes: issuing QoS parameters and rules to the BAS, the plurality of subscriber access devices, a network aggregation device and/or subscriber terminal devices if the real-time service is allowed to access the broadband access network; managing the real-time service by the BAS, the plurality of subscriber access devices, the network aggregation device or the subscriber terminal devices according to the QoS parameters and rules.

The method further includes updating bandwidth resources occupation information of the logical channel after allowing the real-time service to access the broadband access network, and identifying bandwidth resources occupation of the logical channel;
updating the bandwidth resources occupation information of the logical channel after the real-time service is completed releasing the bandwidth resources occupied by the real-time service.

An embodiment of the present invention provides a device for guaranteeing QoS of services in a broadband access network, includes a bandwidth resources management unit for establishing a plurality of logical channels between a plurality of subscriber access devices and a Broadband Access Server (BAS) respectively, and allocating bandwidth resources for each of the plurality of logical channels; and an access control unit for determinining whether to allow a real-time service to access the broadband access network channels according to bandwidth resources occupation information of the plurality of logical channels and releasing bandwidth resources occupied by the real-time service after the real-time service is completed.

The access control unit determines whether remaining bandwidth of a logical channel of the plurality of logical channels satisfies bandwidth resources requirements of the real-time service, otherwise, reject the accessing of the real-time service.

The access control unit further issues QoS parameters and rules to the BAS, the plurality of subscriber access devices, a network aggregation device and/or subscriber terminal devices.

The device further includes a bandwidth resources management unit for managing the bandwidth resources occupation information of the plurality of logical channels.

The bandwidth resources management unit stores information of each of the plurality logical channels and bandwidth resources information corresponding to each of the plurality logical channels.

An embodiment of the present invention provides a broadband access network for guaranteeing QoS of services, includes a plurality of subscriber terminals, a plurality of subscriber access devices, a Broadband Access Server (BAS); in which a subscriber terminal of the plurality of subscriber terminals accesses the broadband access network through a subscriber access device of the plurality of subscriber access devices, and the BAS is the aggregation point for the subscriber traffic, the broadband access network further includes an Access Resources Manager (ARM), configured to establish a plurality of logical channels between the plurality of subscriber access devices and the BAS respectively, allocate bandwidth resources for each of the plurality of logical channels; and determine whether to allow a real-time service to access the broadband access network according to bandwidth resources occupation information of the plurality of logical channels; release bandwidth resources occupied by the real-time service after the real-time service is completed.

The ARM is embedded in the BAS or separated from the BAS, and is connected with the BAS, the plurality of subscriber access devices, a network aggregation devices and/or the plurality of subscriber terminal devices.

The ARM is connected with a real-time service control point in a communication network, and communicates with the real-time service control point.

It can be seen from the technical solution above that, the broadband network operator can guarantee QoS for real-time services in the broadband access network range, and allocate bandwidth resources for corresponding services according to their requirements, because the ARM is adopted to centralizedly manage the bandwidth resources in the broadband access network. Meanwhile, the embodiments of the present invention realize service concentration, which makes the development of a large scale of subscribers and services more convenient. Accordingly, operators are able to use a single network to provide more types of services, reduce the network CAPEX and OPEX (Operation EXpenditure), and generate highest value.

### Brief Description of the Drawings

Fig. 1 is a simplified schematic diagram illustrating the network architecture of a conventional broadband access network.
Fig. 2 is a simplified schematic diagram illustrating the network architecture of a broadband access network according to an embodiment of the present invention.
Fig. 3 is a simplified flow chart of the broadband access method according to an embodiment of the present invention.
Figs. 4 and 5 are simplified schematic diagrams illustrating logical channels established in the broadband access network according to an embodiment of the present invention.

### Detailed Description of the Invention

According to an embodiment of the present invention, an Access Resources Manager (ARM) is set in a broadband access network, and a plurality of logical channels between a Broadband Access Server (BAS) and a plurality of subscriber access devices are established respectively. The ARM implements centralized management of the bandwidth resources of the plurality of logical channels, so QoS in the broadband access network is guaranteed according to the bandwidth resources occupation information of each of the plurality of logical channels.

The specific implementing manner of embodiments of the present invention will be described hereafter with reference to the attached drawings.

In an embodiment of the present invention, the network architecture of a broadband access network guaranteeing the QoS is shown in Fig. 2. The network includes the followings:
A subscriber access device:
   The subscriber access device provides subscriber line multiplexing function. The subscriber access device may be an ATM DSLAM, an Internet Protocol (IP) DSLAM, or a LAN Switch.
   The subscriber access device implements flow managements for corresponding services according to QoS parameters and rules issued by the ARM. If the subscriber access device is an ATM DSLAM, the ATM QoS mechanism is supported, and the traffic policing and flow scheduling are implemented based on Permanent Virtual Circuit (PVC). If the subscriber access device is an IP DSLAM, the functions of flow classification, Control Access Rate (CAR), packet priority schedule, 802.1P, etc. are provided, and moreover, PVCs bearing different services can be mapped to different VLANs so that a schedule service is implemented according to the VLANs. If the subscriber access device is a LAN switch, the functions of flow classification, Control Access Rate (CAR), packet priority schedule, 802.1P, etc. need to be provided.

A network aggregation device:
The network aggregation device may be an ATM switch or an Ethernet switch, and is used to connecte the subscriber access device to the BAS.
Similarly, the network aggregation device can also implement flow management for corresponding services according to QoS parameters and rules issued by the ARM. If the network aggregation device is an ATM switch, the ATM QoS mechanism is supported, and the scheduling can be implemented based on the PVC/PVP. If the network aggregation device is an Ethernet switch, the scheduling can be implemented based on 802.1P, or based on VLANs.

A Broadband Access Server (BAS):
The BAS is the aggregation point for the subscriber traffic, and is used to cooperate with the AAA server to implement the AAA functions for the subscriber. The BAS supports flow classification, re-maked of priority identifiers, traffic policing, congestion control, queue scheduling, etc.
In this embodiment, the BAS and the ARM are required to cooperate with each other to support collection of an address, topology, and the bandwidth information of the subscriber access device, and issue the bandwidth and the QoS parameters to the subscriber access device or the network aggregation device dynamically. The address, topology, and bandwidth information of the subscriber are generally stored in a network management device, or stored in the subscriber access device. The BAS further needs to support functions of mapping IP priorities of Ethernet exporting packets to 802.1P priorities, and mapping IP priorities to ATM network priorities.

An Access Resources Manager (ARM):
The ARM is used to acquire network topology information and link parameters, interact information with a real-time service control node, receive occupying and releasing requests for related bearer resources, implement processes of occupying and releasing corresponding resources, and determine whether to accept new service loads by calculating the network occupation of the access layer to guarantee the resources not to be used out of range, and thus guarantee the QoS of the accessed services. The real-time service control node may be a SOFT SWITCH or the like in a Next Generation Network (NGN).
The ARM can acquire the network topology information through dynamic protocols or static configurations. The network topology information includes physical topology information and logical topology information. The network topology structure of the broadband access network may be styles of star, tree, ring, chain etc.
The ARM is used in this embodiment to centralizedly manage the bandwidth resources of the whole broadband access network, which is favorable to the centralized allocation of the broadband resources of the whole network, and the bandwidth requirements of various services is better satisfied. Meanwhile, the ARM newly added in this embodiment makes signaling interactions with the real-time service control point convenient, which further makes the process of controlling service access become flexible and convenient.

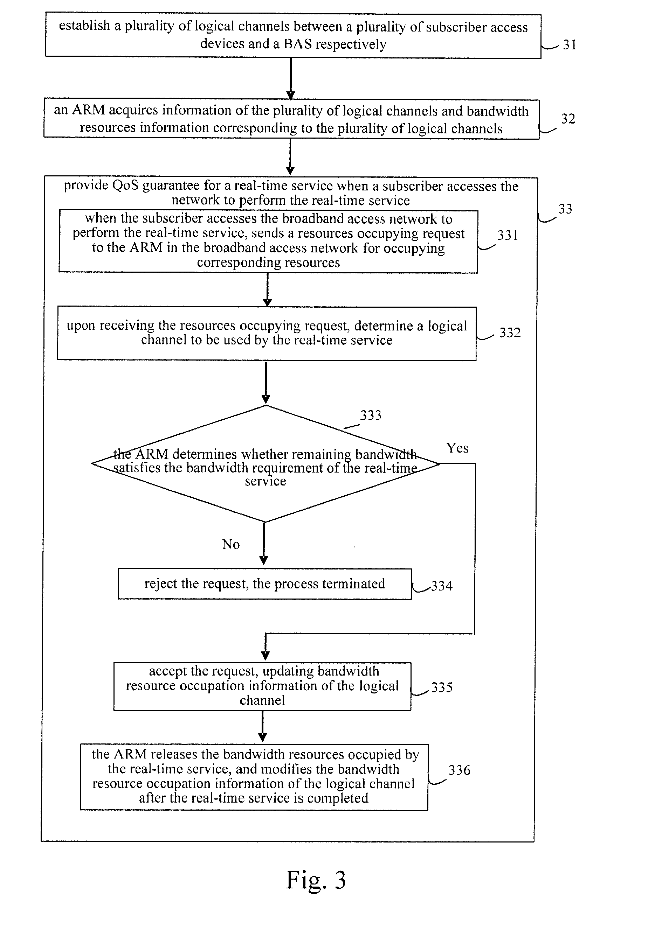

The specific implementing manner of the method according to an embodiment of the present invention is shown in Fig. 3.

Block 31: Establish a plurality of logical channels between a plurality of subscriber access devices and a BAS; there is one or multiple logical channels between each of the plurality of subscriber access devices and the BAS.

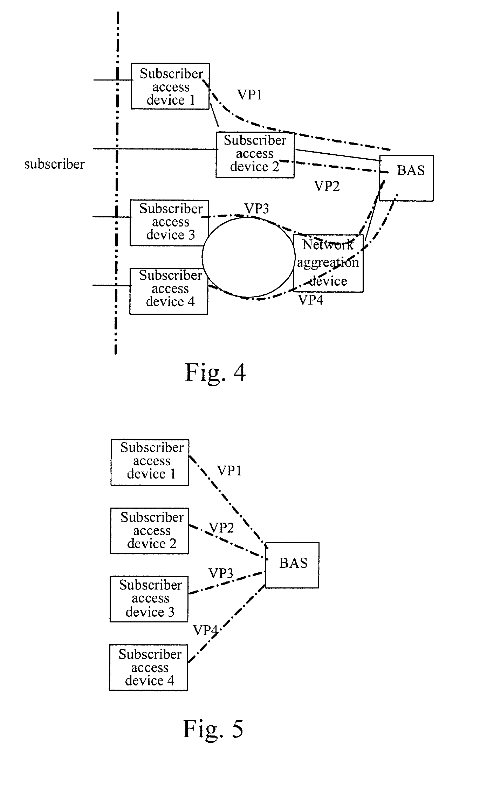

For example, the topology of the broadband access network is in a style of star referring to Figs. 4 and 5. Each of the plurality of subscriber access device establishes one or multiple logical channels to the BAS in advance. Devices passed by the logical channel should provide QoS guarantee for the logical channel. The logical channel may be a Virtual Path (VP), a VLAN channel, or an LSP, etc.

The multiple logical channels can be respectively established on a same subscriber access device according to types of services. For example, a logical channel is established in conjunction with the voice service, while another logical channel is established for the video service.

Block 32: The ARM acquires the network topology informaiton of the access network, and bandwidth parameters of each access device and the network aggregation device; i.e., the ARM acquiries informaiton of the plurality of logical channels between the plurality of subscriber access device and the BAS and bandwidth resources information corresponding to the plurality of logical channels.

According to the network topology information acquired, the ARM can maintain the topology information of each of the plurality of subscriber access device and network aggregation device in the access network, such as star topology information. The topology diagram records the Leader-Member Relationship between all of the plurality of subscriber access devices and network aggregation device, the uplink and downlink bandwidth occupation of each device. The bandwidth includes physical port bandwidth and logical channel bandwidth.

Block 33: Through the above process, the ARM acquiries the bandwidth resources information of the logical channels between each of the plurality of subscriber access devices and the BAS; and then, the ARM is able to provide a corresponding QoS guarantee for the service when the subscriber accesses the network to perform a service. The specific process in conjunction with dialing in and hanging up of real-time services is as follows.

Block 331: when a subscriber accesses the broadband access network to perform real-time service, the subscriber establishes a call connection through signaling first; upon receiving signaling packets from the subscriber, the real-time service control point sends a resources occupying request to the ARM in the broadband access network for occupying corresponding bandwidth resources.

Block 332: upon receiving the resources occupying request, the ARM firstly determines access devices to be passed when the subscriber accesses the network, and then determines a logical channel to be used by the service.

The process of determining access devices to be passed when the subscriber accesses the network can be implemented by locating a broadband subscriber. For example, the access devices in the access network can be determined according to access port information of the network accessed by the subscriber born in packets.

If the subscriber access device has multiple logical channels, type information of each of the multiple logical channels is needed to determine the logical channel to be occupied by this real-time service. For example, the logical channel to be occupied is determined according to the type of service. Of course, the corresponding logical channel can be determined according priorities of the services if the multiple logical channels are established according to the priorities of services.

Diamond 333: The ARM checks bandwidth resources occupation information of the logical channel stored by the ARM, and determines whether the remaining bandwidth resources satisfies the bandwidth resouce requirement of the real-time service. If the remaining bandwidth resources does not satisfy the bandwidth resources requirement of the real-time service, rejects the request in Block 334, the request of the subscirber fails and the process is termimated. If the remaining bandwidth resources satisfies the bandwidth resources requirement of the real-time service, accepts the request in Block 335, updates the bandwidth resources occupation information of the logical channel, and go to Block 336 after the real-time service is completed.

Block 336: After the real-time service is completed, a Service Control Function (SCF), that is the real-time service control point, removes the connection established for this service, and requests the ARM in the access layer for releasing the bandwidth resources occupied by the real-time service; the ARM deletes the corresponding broadband resources occupation information, and modifies the bandwidth resources occupation information of the logical channel.

In this embodiment, QoS parameters and rules can be issued to the BAS if the real-time service is allowed to access the broadband access network in Block 335. So the BAS can provide corresponding QoS for the real-time service according to the QoS parameters and rules. Correspondingly, when the real-time service is completed, the ARM needs to notify the BAS of deleting the QoS parameters and rules of the service.

According to an embodiment of the present invention, the ARM further configures the QoS parameters and rules for each of the plurality of subscriber access devices, subscriber terminal devices or network aggregation devices according to the QoS requirements of a real-time service during the process of establishing the real-time service. As a result, the plurality of subscriber access devices, subscriber terminal devices or network aggregation devices are able to differentiate real-time services and conventional data services, and guarantee, when congestion happens, the QoS of real-time services through QoS mechanisms including flow policing, queue schedule and the like. That is, the subscriber access devices, and subscriber terminal devices or network aggregation devices all can be accept the management of the ARM. In this way, when a subscriber performs real-time services, the ARM can modify the QoS parameters and rules of the subscriber access devices, subscriber terminal devices or network aggregation devices dynamically to guarantee the QoS of real-time services in the broadband access network better. Otherwise, the QoS parameters and rules can only be configured on corresponding devices statically, leading to a bad service extension, and it is unbearable if the number of static configurations is too high. For example, some access device allows 1000 subscribers to access. Then there the static configuration needs to support 5000 rules in case that each subscriber performs 5 services.

The foregoing is only preferred embodiments of the present invention. The protection scope of the present invention, however, is not limited to the above description. Any change or substitution, within the technical scope disclosed by the present invention, easily occurring to those skilled in the art should be covered by the protection scope of the present invention. Therefore, the protection scope of the present invention should be according to the claims.

## Claims

1. A method for guaranteeing Quality of Service (QoS) of services in a broadband access network, comprising:
establishing a plurality of logical channels between a plurality of subscriber access devices and a Broadband Access Server (BAS) respectively,
allocating bandwidth resources for each of the plurality of logical channels;
determining whether to allow a real-time service to access the broadband access network according to bandwidth resources occupation information of the plurality of logical channels;
releasing bandwidth resources occupied by the real-time service after the real-time service is completed.

2. The method of Claim 1, wherein at least one logical channel is established between each of the plurality of subscriber access devices and the BAS.

3. The method of Claim 2, wherein the plurality of logical channels are Virtual Paths (VPs), Virtual Local Area Network (VLAN) channels, or Label Switch Paths (LSPs).

4. The method of Claim 3, further comprising:
storing information of each of the plurality of logical channels and bandwidth resources information correspongding to each of the plurality of logical channels.

5. The method of Claim 4, further comprising:
setting or modifying the bandwidth resources information corresponding to each of the plurality of logical channels locally or through remote login.

6. The method of Claim 1, wherein determining whether remaining bandwidth resource of a logical channel of the plurality of logical channels satisfies the bandwidth resources requirements of the real-time service, allowing the real-time service to access the broadband access network if the remaining bandwidth resource of the logical channel of the plurality of logical channels satisfies the bandwidth resources requirements of the real-time service; otherwise, rejecting the accessing of the real-time service.

7. The method of Claim 6, further comprising:
issuing QoS parameters and rules to the BAS, the plurality of subscriber access devices, a network aggregation device and/or subscriber terminal devices if the real-time service is allowed to access the broadband access network;
managing the real-time service by the BAS, the plurality of subscriber access devices, the network aggregation device or the subscriber terminal devices according to the QoS parameters and rules.

8. The method of Claim 7, further comprising:
updating bandwidth resources occupation information of the logical channel afer allowing the real-time service to access the broadband access network, and
identifying bandwidth resources occupation of the logical channel;
updating the bandwidth resources occupation information of the logical channel after the real-time service is completed and releasing the bandwidth resources occupied by the real-time service.

9. A device for guaranteeing Quality of Service (QoS) of services in a broadband access network, comprising:
a bandwidth resources management unit for establishing a plurality of logical channels between a plurality of subscriber access devices and a Broadband Access Server (BAS) respectively, and allocating bandwidth resources for each of the plurality of logical channels; and
an access control unit for determining whether to allow a real-time service to access the broadband access network channels according to bandwidth resources occupation information of the plurality of logical channels and releasing bandwidth resources occupied by the real-time service after the real-time service is completed.

10. The device of Claim 9, wherein the access control unit determines whether remaining bandwidth of a logical channel of the plurality of logical channels satisfies bandwidth resources requirements of the real-time service, otherwise, reject the accesssing of the real-time service.

11. The device of Claim 10, wherein the access control unit further issues QoS parameters and rules to the BAS, the plurality of subscriber access devices, a network aggregation device and/or subscriber terminal devices.

12. The device of Claim 9, further comprising:
a bandwidth resources management unit for managing the bandwidth resources occupation information of the plurality of logical channels.

13. The device of Claim 12, wherein the bandwidth resources management unit stores information of each of the plurality logical channels and bandwidth resources information corresponding to each of the plurality of logical channels.

14. A broadband access network for guaranteeing Quality of Service (QoS) of services, comprising a plurality of subscriber terminals, a plurality of subscriber access devices, a Broadband Access Server (BAS), wherein a subscriber terminal of the plurality of subscriber terminals accesses the broadband access network through a subscriber access device of the plurality of subscriber access devices, and the BAS is the aggregation point for the subscriber traffic;
the broadband access network further comprising:
an Access Resources Manager (ARM), configured to:
establish a plurality of logical channels between the plurality of subscriber access devices and the BAS respectively,
allocate bandwidth resources for each of the plurality of logical channels; and
determine whether to allow a real-time service to access the broadband access network according to bandwidth resources occupation information of the plurality of logical channels;
release bandwidth resources occupied by the real-time service after the real-time service is completed.

15. The broadband access network of Claim 14, wherein the ARM is embedded in the BAS or separated from the BAS, and is connected with the BAS, the plurality of subscriber access devices, a network aggregation device and/or the plurality of subscriber terminal devices.

16. The broadband access network of Claim 14, wherein the ARM is connected with a real-time service control point in a communication network, and communicates with the real-time service control point.
